# EUROPÄISCHE PATENTSCHRIFT

(11) **EP 1 414 706 B1**
(45) Veröffentlichungstag und Bekanntmachung des Hinweises auf die Patenterteilung: **04.10.2006**
(21) Anmeldenummer: 02748533.3
(22) Anmeldetag: 07.08.2002
(51) Int. Cl.: B65D 35/12, B29D 23/20

(54) **Verfahren zur Herstellung eines Verpackungsbehälters**
Method of manufacturing a packaging container
Procédé pour la fabrication d'un récipient de conditionnement

(30) Priorität: 07.08.2001 DE 10137937
(43) Veröffentlichungstag der Anmeldung: 06.05.2004
(73) Patentinhaber: KMK Lizence Ltd., Port Louis (MU); PackSys Global (Switzerland) Ltd., 8630 Rüti (CH)
(72) Erfinder: SCHEIFELE, Fredy, CH-8500 Frauenfeld (CH)
(74) Vertreter: Peege, Klaus
(86) Internationale Anmeldenummer: PCT/CH2002/000432
(87) Internationale Veröffentlichungsnummer: WO 2003/013965

(56) Entgegenhaltungen:
- EP-A- 0 130 239
- EP-A- 0 496 704
- US-A- 3 295 725

## Beschreibung

Die Erfindung betrifft ein Verfahren zur Herstellung eines Verpakkungsbehälters, insbesondere einer Verpackungstube nach dem Oberbegriff des Patentanspruches 1.

Verpackungsbehälter, insbesondere Verpackungstuben, umfassen einen rohrförmigen Tubenkörper, einen mit dem Tubenkörper, auch Tubenrohr genannt, verbundenen Tubenkopf mit einem Auslass und eine den Auslass öffnende und verschliessende Verschlusskappe, die mit dem Tubenkopf, beispielsweise über ein Gewinde in Eingriff steht. Zur Herstellung von Verpackungsbehältern der vorstehend umrissenen Ausgestaltung haben sich verschiedene Verfahren herausgebildet. Rohrkörper werden z.B. extrudiert auch coextrudiert, oder ausgehend vom einen Folienstreifen durch sogenanntes Längsnahtschweissen hergestellt, bei dem die Ränder des Folienstreifens durch Anwendung von Wärme und Druck unter Bildung des Tubenrohres miteinander verbunden werden. Als Materialien für die Tubenrohre kommen Metalle, Kunststoffe mit und ohne Barriereschichten und Kombinationen davon zur Anwendung, wobei sich die Materialauswahl meist an Packgütern, für die eine Tube bestimmt ist, orientiert. Hochwertige Verpackungsgüter wie Pharmazeutika, Kosmetika und andere Körperpflege- wie z.B. Zahnpflegemittel (Zahnpasta), die flüchtige Wirkstoffe oder Aromastoffe enthalten oder auf Gase reagieren, erfordern für Tubenrohre diffusionsresistente Materialien oder Materialkombinationen, während für anspruchslose Verpackungsgüter, wie z.B. technische Schmierstoffe, Materialien ohne Sperrwirkung ausreichend sind. Unter Diffusion wird hier die Migration von flüchtigen Bestandteilen vom Tubeninneren nach aussen und umgekehrt verstanden. Nach Fertigstellung der Tubenrohre werden letztere mit Köpfen ausgestattet. Die Ausstattung kann durch Pressformen oder Spritzgiessen oder durch Anbringung eines vorgefertigten Kopfes an das Tubenrohr erfolgen. Dabei sind die zur Anwendung kommenden Kunststoffe der Köpfe und Rohre kompatibel, weil bei genannten Anformungsarten Kunststoffe des Kopfes und Rohres zur Herstellung der Verbindung ineinanderfliessen müssen. Beim Pressformen wird während der Umformung eines Rohlings aus plastifiziertem Kunststoff in einer Pressform ein Ende des Tubenrohres mit dem entstehenden Kopf verbunden. Das Anformen durch Spritzgiessen kennzeichnet sich dadurch, dass ein Tubenrohrende während des Formfüllvorganges an den Kopf angeformt wird. Wird ein vorgefertigter Kopf mit einem Tubenrohrende verbunden, dann wird das Tubenrohr durch Aufschmelzen und Druck mit einem Rand der Schulter eines Kopfes verbunden.

Bei Verpackungstuben für hochwertige Verpackungsgüter, deren Tubenrohre durch entsprechende Materialwahl weitgehend diffusionsresistent ausgebildet sind, gibt die Anpassung der Diffusionsresistenz des Tubenkopfes an die des Tubenrohres Probleme auf. Für die vorerwähnten Kopfbildungs- und Anformverfahren kommen als Werkstoffe Polyolefine, vorzugsweise Polyethylen (PE) und Polypropylen (PP) zur Awendung. Mit diesem Kopfwerkstoff muss bei Verwendung eines Laminates als Rohrwerkstoff der Werkstoff mindestens einer Laminatschicht. d.h. einer Deckschicht, kompatibel sein, so dass eine Kopf-Rohrverbindung durch Aufschmelzen und Anwendung von Druck erfolgen kann. Die genannten Polyolefine haben den Vorteil der guten Verbindbarkeit, jedoch den Nachteil, dass sie flüchtige Bestandteile, wie beispielsweise Aromastoffe von Packgütern absorbieren, mit der Folge, dass das Packgut an Qualität verliert, ferner kann eintreten, dass der Kopf sozusagen zerfällt, indem die Werkstoffkonsistenz weich, d.h. schwammig, wird. Fortschreitender Zerfall der Werkstoffkonsistenz begünstigt den Anstieg der Absorbtion von flüchtigen Bestandteilen und gefährdet die Festigkeit der Verbindung von Tubenkopf und Tubenrohr.
Gegen diese ungenügende Diffusionsresistenz sind Abdichtungen entwickelt worden. Unterschieden wird zwischen Aussen- und Innenabdichtungen, wobei erstere auf die Aussenfläche der Tubenschulter, letztere auf die dem Tubeninneren zugewandte Innenfläche der Tubenschulter, die Schulterflächen vom Hals bis zur Verbindung von Rohr und Kopf abdeckend aufgebracht wird. Die Abdichtungen als ringförmige Scheiben, mit zentralem Loch als Oeffnung für den Ausgusskanal werden als Rondellen, dem Ort ihrer Aufbringung entsprechend als Aussen- und Innenrondellen bezeichnet. Zur Abdichtung von Tubenköpfen haben die Aussenrondellen nicht die gleiche Bedeutung der Innenrondellen erlangt. Dies liegt daran, dass sie entsprechend materialmässig ausgebildet zwar den Gasedurchtritt (O₂, CO₂ etc.) von aussen nach innen erschwert oder unterdrückt, nicht aber gegen Absorption von gasförmigen Packgut-Komponenten (z.B. Aromastoffe etc.) wirksam ist, wohingegen die Innenrondelle beide Dichtfunktionen erfüllt, vorausgesetzt eine Innenrondelle deckt die innere Oberfläche einer Tubenschulter fehlstellenfrei ab. Unter Fehlstellen werden hier Falten oder Wellungen der Rondelle verstanden, deren offenen Seiten nicht mit der Fläche der Tubenschulter verbunden sind. Fehlstellen führen häufig zu Brüchen der Abdichtungen, d.h. Rondellen, wodurch jedwede Sperrwirkung aufgehoben wird.

Als Werkstoff für Rondellen, Rondellen werden aus Folienbahnen herausgearbeitet, kommen Monofolien (Kunststoff- oder Metallmonofolien), Kunststoff-Kunststoff Laminate und Kunststoff-Metall Laminate in Betracht. Von diesen Folien haben sich im wesentlichen nur die Kunststoff-Metall-Laminate durchgesetzt, und zwar aus dem Grund, dass nur Rondellen aus dieser Materialkombination fehlstellenfrei mit der Schulter eines Kopfes verbindbar sind, wobei die Fehlstellenfreiheit mit Rondellen aus Kunststoff-Folien einschliesslich Kunststoff-Laminat-Folien nicht mit Sicherheit erreichbar ist.

Kunststoff-Metall-Laminate bestehen aus einer Aluminiumfolie, die beidseits mit Folien aus einem Polyolefin beplankt, d.h. überdeckt ist. Meistens finden sich zwischen der Aluminium-Schicht und den Polyolefinschichtungen noch sogenannte Haftvermittler. Die Aluminiumschicht oder Aluminiumfolie dient als Sperrschicht, und sie stellt eine Sperrschicht sehr hoher Wirksamkeit gegen Migration von Medien jedweder Art dar, wohingegen eine Polyolefinschicht als Verbindungsmittel der Rondelle mit der Schulterfläche, die an der Polyolefinschicht als Abdeckung der Aluminiumschicht gegenüber dem Packgut dient. Den Vorteilen der fehlstellenfreien Montage am Kopf und der hohen Diffusionsresistenz stehen Nachteile der Kunststoff-Metall-Laminat-Rondellen gegenüber. Rondellen werden aus einer Materialbahn ausgeschnitten, d.h. herausgestanzt. An der Schnitt- d.h. Stanzkante wird die Aluminiumfolie blankliegend freigelegt. Dieser metallische Teil der Stanzkante ist in Einbaulage der Rondelle, zufolge einer Differenz zwischen Aussendurchmesser der Rondelle und Innendurchmesser des Tubenrohres, gegenüber dem Packgut ungeschützt und je nach Art des Packgutes kann das Metall zu Kontaminationen des Packgutes oder das Packgut zu Korrosionen der Metallschicht ausgehend von der metallischen Schnittkante führen. Ferner neigen Rondellen aus Folien der vorstehend beschriebenen Art ausgehend von der Schnittkante zwischen beiden Beplankungen und der metallischen Zwischenschicht zu Delaminationen. Die Nachteile der Produktkontamination, Korrosion und Delamination weisen Rondellen aus Kunststoff nicht auf, hingegen ist ihre ausgeprägte Neigung zu Faltungen und Wellungen ein vergleichsweise gleichrangiger Nachteil.

Ausgehend von diesem Stand der Technik hat sich der Erfinder die Aufgabe gestellt, ein Verfahren zur Herstellung vermittels an sich bekannter Rondellen (Innenrondellen) abgedichteter Tubenköpfe von Tuben zu entwickeln, mit dem die Nachteile bekannter Verfahren zur Herstellung von Tuben mit abgedichten Köpfen vermieden sind und diese Aufgabe wird durch ein Verfahren mit den kennzeichnenden Merkmalen des Anspruches 1 gelöst. Zu den Vorteilen der Lösung gehört auch, dass das erfindungsgemässe Verfahren für alle Kopfanformverfahren verwendbar ist und keine konstruktiven Aenderungen an Kopfanformwerkzeugen erfordert.

Vorteilhafte Ausgestaltungen des Verfahrens nach der Erfindung kennzeichnen die dem Anspruch 1 nachgeordneten Ansprüche.

Weitere Vorteile, Merkmale und Einzelheiten der Erfindung ergeben sich aus der folgenden Beschreibung eines bevorzugten Ausführungsbeispieles des Verfahrens und der Zeichnung, es zeigen:
- Fig. 1: eine erste Ausführungsform eines Tubenendes in Axialschnitt mit einer tellerförmigen Scheibe (Innenrondelle) im Schulterteil eines Tubenkopfes;
- Fig. 2: eine weitere Ausführungsform gemäss Fig. 1, bei der die Innenrondelle ein vorderes Tubenende überlappt;
- Fig. 3a: einen Dorn mit aufgebrachter nicht vorgeformter Rondelle im Schnitt;
- Fig. 3b: im Schnitt eine vorgeformte Rondelle, dazu bestimmt, nur den Schulterteil eines Tubenkopfes abzudecken;
- Fig. 3c: einen Dorn mit aufgebrachter Rondelle im Schnitt gemäss Fig. 3b;
- Fig. 3d: im Schnitt eine vorgeformte Rondelle, die den Schulterteil eines Tubenkopfes und ein vorderes Tubenende überdeckt;
- Fig. 3e: einen Dorn mit aufgebrachter Rondelle im Schnitt gemäss Fig. 3d;
- Fig. 4: ein Formgebungswerkzeug umfassend Dorn und Matrize in schematisierter Darstellung.

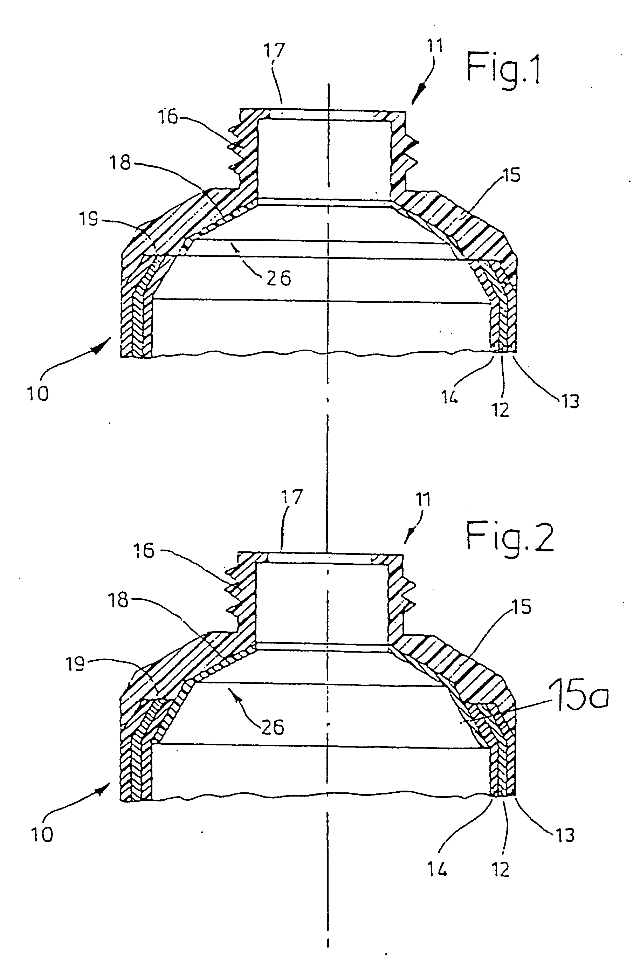

In den Fig. 1 und 2 (gleiche Teile sind in allen Figuren mit gleichen Bezugszeichen versehen) sind mit 10 nur in ihrem kopfseitigen Endbereich dargestellte Tubenrohre bezeichnet, die zusammen mit den allgemein mit 11 bezeichneten Köpfen jeweils Teil einer Verpackungstube bilden.

Das Tubenrohr ist beispielsweise aus einem dreischichtigen Laminat gebildet. Dieses Laminat besteht aus einer sperrend wirkenden Mittelschicht oder Sperrschicht 12 aus EVAL (Ethylen-Venylalkohol-Copolymer) oder PETP (Polyäthylenterephtalat) beidseits beplankt mit Schichten 13 und 14 aus PE (Polyäthylen), wobei dieses PE ein LDPE (Low Density Polyethylene), ein HDPE (High Density Polethylene), ein LLDPE (Linear Low Density Polyethylene) oder Mischungen davon sein kann. Die Schicht 12 kann mit den Schichten 13, 14 vermittels Zwischenschichten (nicht gezeigt) aus Copolymeren verbunden sein. Anstelle der Kunststoffsperrschichten kann auch eine aus Metall, vorzugsweise Aluminium Verwendung finden. Für die Herstellung eines Tubenrohres 10 ist es vorteilhaft, die Schichten 13 und 14 aus Polyäthylen vorzusehen, da dessen gute Verschweissbarkeit die Herstellung guter und dichter Schweissnähte gewährleistet.

Der Kopf 11, auch Kopfteil genannt, ist aus einem Schulterteil 15 und einem Ausguss 16 mit Ausgussöffnung 17 gebildet, wobei der Ausguss 16 auf seiner äusseren Oberfläche Eingriffsmittel für einen Tubenverschluss, beispielsweise ein Gewinde, trägt. Der Kopf aus Kunststoff, vorzugsweise Polyäthylen, kann durch Spritzgiessen entweder vorgeformt oder angeformt sein. Bei gleichem Werkstoff kann der Kopf 11 auch durch Verpressen einer plastifizierten Materialportion, d.h. eines Rohlings, gebildet sein. Die Verbindung des Tubenrohres 10 und die Bildung des Kopfes 11 erfolgt meist in einem Arbeitsschritt, indem beim Spritz- wie Pressformen Enden der Tubenrohre 10 einends in Spritz- oder Pressformen eingebracht und während des Formgebungsvorganges des Kopfes mit letzterem verbunden werden. Bei der Montage eines Fertigkopfes mit einem Rohrende werden Aufschmelzungen der Kunststoffe des Kopfes und des Rohrendes und Verpressung vorgenommen.

Verspritztes oder verpresstes Polyäthylen hat eine höhere Durchlässigkeit für Aroma- und Duftstoffe, Sauerstoff und Kohlendioxid, als eine Kunststoff-Mehrschichtfolie. Aus diesem Grund ist der Kopf 11 für höherwertige Verpackunsgüter diffusionsresistent, vergleichbar zum Tubenrohr abzudichten. Dazu sind gemäss Fig. 1 und 2 diffusionssperrende Einrichtungen 26, in Fig. 1 beispielsweise in Form einer tellerförmigen Scheibe 18 (auch Innenrondelle genannt) vorgesehen, die auf der dem Inneren der Tube 11 zugewandten Seite des Schulterteiles 15 anliegt und sich einends vom Rohrende 19 und anderenends bis zur Eintrittsöffnung des Ausgusses 16 erstreckt und vorzugsweise flächig mit dem Kopf 11 verbunden ist. Fig. 2 zeigt eine vorteilhafte Weiterbildung der Ausführungsform nach Fig. 1. Danach ist die Innenrondelle 18 so ausgebildet, dass sie einends das in das Schulterteil 15 eingebrachte Rohrende 19 abdeckend überragt und anderenends bis zur Eintrittsöffnung des Ausgusses 16 verläuft. Mit dieser Ueberlappung wird eine bessere Dichtigkeit zwischen der Innenrondelle 18 und dem Rohrende 19 erreicht.

Bei vorgefertigten Tubenköpfen 11 kann die Rondelle18 gemäss Fig. 1 und 2 in die Tubenköpfe eingeklebt oder eingeschweisst werden.

Bei Bildung des Tubenkopfes durch Spritz- oder Pressformen unter gleichzeitiger Verbindung mit dem Tubenrohr oder bei der Fertigkopfmontage hat es sich als vorteilhaft erwiesen, Innenrondellen 18 aus vorzugsweise einem PE/EVAL oder PE/PETP Zwei- oder Mehrschichtlaminat zu fertigen, wobei eine PE-Laminatschicht 26a die äussere Oberfläche der Rondelle, also die Oberfläche zu bilden hat, die nach Formbildung der Köpfe 11 durch Spritz- oder Pressformen oder Montage mit der inneren Oberfläche der Schulter 15 des Kopfes 11 in Eingriff kommt, wobei die EVAL oder PETP-Schicht 26 die Sperre gegen Diffusion bildet. Vorteilhafterweise können die Kunststoffe der Rondellen 18 eingefärbt sein. Farbige Schichtungen erleichtern optische Qualitätskontrollen manueller und/oder maschineller Art.

Kunststoff-Monofolien, beispielsweise PET oder PA (Polyamid) oder EVAL haben vorzugsweise abhängig vom Füllgut und Tubengrösse eine Dicke von 15 µ bis 80 µ, vorzugsweise 20 µ bis 40 µ. Kunststoff-Laminate (d.h. Mehrschichtfolien) haben bevorzugt eine Gesamtdicke von 60 µ bis 200 µ, vorzugsweise 100 µ bis 140 µ, davon beträgt die Dicke einer Barriereschicht, beispielsweise aus PET, EVAL oder PA 5 µ bis 60 µ, vorzugsweise 10 µ bis 30 µ (µ= 0,001 mm).

Bei der Spritz- oder Pressformgebung eines Kopfes 11 kommen mehrteilige aus Matrize 29 und Patrize (Pressdorn) 28 bestehende Werkzeuge zur Anwendung. Die Kopfdichtungsmittel, d.h. Innenrondellen 18, nach der Erfindung mit einer PE-Schicht 26a werden vorgefertigt auf die Patrize aufgebracht und während des Spritz- oder Pressvorganges zur Bildung des Kopfes 11 wird die PE-Schicht 26 mit der Schulter 15 im Falle der Ausführung nach Fig. 2 und mit dem Tubenrohr 10 verbunden.

Im Falle der Ueberlappung des Tubenendes 19 durch die Rondelle 18 nach der Erfindung verbinden sich auch die innere PE-Schicht 14 des Tubenrohres 10 mit der äusseren Schicht 26a der Innenrondelle 18, was zusätzliche zu einer grösseren Dichtigkeit auch zu einer Verstärkung der Verbindung zwischen Tubenrohr 10 und Kopf 11 führt.

Das vorstehend beschriebene, bevorzugte Ausführungsbeispiel eines Verfahrens mit einer Rondelle 18 ist nicht auf Schichten 26a, 26 aus Polyäthylen und EVAL oder PETP oder PA beschränkt. Zur Anwendung kann für bezeichnete Schichten auch Polypropylen (Schicht 26) mit EVAL oder PETP, PA oder andere als Barrieren geeignete Materialien (Schicht 26a) kommen.

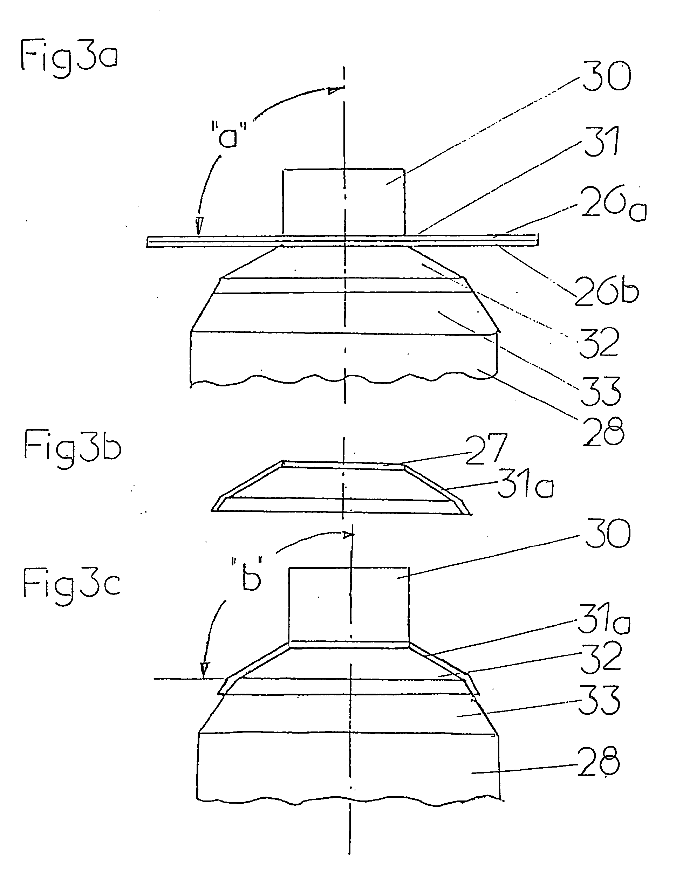

Gemäss dem Verfahren nach der Erfindung sind zur Meidung von Fehlstellen, d.h. Falten und/oder Wellungen der Rondelle 18 bei Anlage bzw. Verbindung mit der inneren Oberfläche der Schulter 15 Rondellen 18 vorzuformen. In ihrer einfachen in Fig. 3a dargestellten Form ist die Rondelle 18 eine runde Scheibe - mit einer mittigen runden Ausnehmung 27 -, die für den Durchgriff des den Ausgusskanal bildenden Teiles 30 des Stempels 28 vorgesehen ist und einem die Ausnehmung 27 umlaufenden kreisförmigen Rand 31, der eine Ebene aufspannt, die senkrecht zur Mittellinie der Ausnehmung 27 steht, d.h. die Ebene und Mittellinie stehen in unvorgeformten Zustand der Rondelle 18 zueinander unter einem Winkel "a" von 90%, d.h. rechtwinklig. Hiervon ausgehend bedeutet die Bezeichnung "vorgeformt" jede Abweichung der Winkellage von 90 Winkelgraden zwischen bezeichneter Ebene und Mittellinie. Die Vorformung wird folgend in Teilen von Hundert, d.h. in Prozent (%) als Vorformungsgrad ausgedrückt. Ein Vorformungsgrad von Null % bedeutet, bezeichnete Ebene und Mittellinie stehen im rechten Winkel zueinander. Auf die Aufbringung der Rondelle 18 auf den Stempel 28 übertragen bedeutet dies, der kreisförmige Rand 31 der Rondelle 18 ragt von dem den Ausgusskanal bildenden Teil 30 des Stempels 28, d.h. von dessen axialer Mittellinie rechtwinklig ab. Den Stempel 28 betrachtend besteht ein Winkel "b" zwischen der Mittellinie des den Ausgusskanal bildenden Teiles 30 des Stempels 28 und der Fläche des Stempels 32, die die innere Oberfläche der Schulter 15 des Kopfes 11 bildet. Ein Vorformungsgrad von 100% liegt dann vor, wenn der Winkel "a" zwischen Ebene 31 und der senkrechten Mittellinie der Ausnehmung 27 der Rondelle 18 dem Winkel "b" (Winkel der Tubenschulter) zwischen der Mittellinie des den Ausgusskanal bildenden Teiles 30 und der Fläche 32 des Stempels 28 entspricht, d.h. der vorgeformte kreisförmige Rand 31 liegt auf der Fläche 32 des Stempels 28 auf. Bevorzugt nach der Erfindung sind Vorformungsgrade von 20 % (% vom Hundert) bis 95 %, vorzugweise 40 % bis 60 %. Liegen Vorformungsgrade unter 20 % oder über 95 % vor, ist eine gesicherte Fehlstellenfreiheit überraschenderweise nicht erreichbar.

Gemäss Fig. 1 ist eine Schulterfläche 15, in Fig. 2 ist eine Schulterfläche 15 und ein vorderes Verbindungsende 15a eines Tubenrohres 10 mit einer Rondelle 18 abgedeckt. Fig. 3b zeigt eine vorgeformte Rondelle 18, deren Rand 31 als einteiliges Randteil 31a eine Schulterfläche 15 abdeckt. Fig. 3d zeigt eine vorgeformte Rondelle 18 mit einem Rand 31 aus zwei Randteilen 31a und 31b, wobei der Randteil 31a die Schulterfläche 15, der Randteil 31b das Verbindungsende 15a abdeckt.

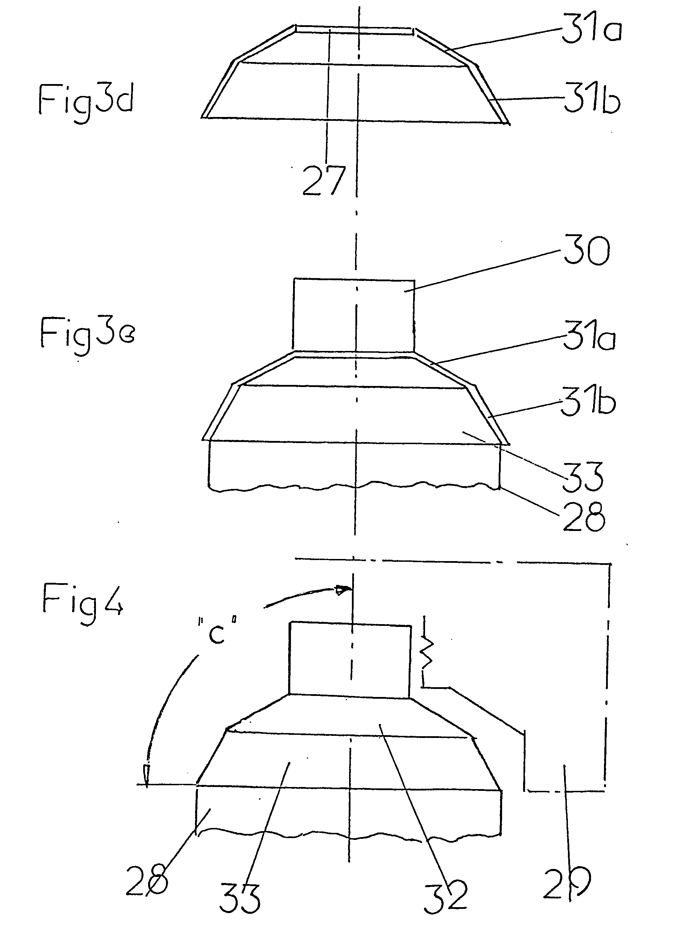

Gemäss Fig. 3e und 4 entspricht das Randteil 31a der Stempelfläche 32 (auch Dornfläche 32), das Randteil 31b der Stempelfläche 33, dabei steht die Stempelfläche 33 unter einem grösseren Winkel zur Mittellinie des Teiles 30 als Winkel "c". Das Randteil 31b kann den gleichen Vorformungsgrad aufweisen wie das Randteil 31a, wobei auch hinsichtlich Randteil 31b die untere Grenze des Vorformungsgrades von 20 % nicht unterschritten und die obere Grenze von 95 % nicht überschritten werden sollte. Zur Durchführung der Erfindung hat sich ferner als vorteilhaft erwiesen, wenn die Randteile 31a und 31b unterschiedliche Vorformungsgrade aufweisen, beispielhalber bei einem Vorformungsgrad von 45 % des Randteiles 31a (umgibt das Teil 30) weist das zweite Randteil 31b (umgibt das erste Randteil 31a) einen Vorformungsgrad von 80 % des Vorformungsgrades des Randteiles 31a auf. Bevorzugt ist bei einem Vorformungsgrad des Randteiles 31a (oder generell ausgedrückt einer ersten Teilfläche) von 40 % bis 85 % den Vorformungsgrad des Randteiles 31b (oder generell ausgedrückt einer zweiten Teilfläche) in einen Bereich von 75 % bis 100 % davon zu legen. Wird beispielhalber für die erste Teilfläche ein Vorformungsgrad von 50 % gewählt, kann der der zweiten Teilfläche 37,5 % bis 50 % betragen. Zweckmässig ist auch, die Rondellen 18 erwärmt auf den Stempel 28 aufzubringen und in erwärmten Zustand in die Matrize 29 (Fig. 4) einzufahren, um anschliessend den Kopf 11 aufzuspritzen oder anzuformen. Ein vorteilhafter Temperaturbereich ist von 40° C bis 80° C, bevorzugt sind Temperaturen der Rondellen 18 im Bereich von 45° C bis 60° C.

## Patentansprüche

1. Verfahren zur Herstellung eines Verpackungsbehälters, insbesondere einer Verpackungstube, bei dem vermittels einer formgebundenen Matrize (29) mit Pressdorn (28), der auf seinem eine Ausgussöffnung (17) und ein Schulterteil (15) bildenden, formgebenden Ende eine das Schulterteil abdeckende Innenrondelle (18) aus mindestens einem kreisförmigem Rand (31) trägt, ein Tubenkopf (11) mit auf dem Schulterteil (15) angeordneter Innenrondelle (18) ausgeformt und an ein Tubenrohr (10) angeformt wird, **dadurch gekennzeichnet, dass** die Rondelle (18) unter Winkeln (a) zwischen ihrem kreisförmigen Rand (31) und einer Ebene senkrecht zur Mittellinie des Pressdornes (28) unter Vorformungsgraden 20% bis 95% der Winkel zwischen der Ebene senkrecht zur Mittellinie und das Schulterteil (15) bildenden Fläche (32) des Pressdornes (28) vorgeformt auf die formgebende Fläche des Pressdornes (28) aufgebracht und die Rondelle (28) während des Formgebungsvorganges zur Anlage an die formgebende Fläche des Pressdornes (28) gebracht wird.

2. Verfahren nach Anspruch 1, **dadurch gekennzeichnet, dass** Rondellen (18) mit Rändern (31) aus mehreren Randteilen (31a, 31b) die Randteile untereinander mit gleichen oder ungleichen Vorformungsgraden ausgebildet auf Pressdorne (28) aufgebracht werden.

3. Verfahren nach Anspruch 1 oder 2, **dadurch gekennzeichnet, dass** Rondellen mit Vorformungsgraden von 40% bis 60% auf Pressdorne aufgebracht werden.

4. Verfahren nach einem der Ansprüche 1 bis 3, **dadurch gekennzeichnet, dass** der Kopf (11) durch Pressformen bei gleichzeitiger Anordnung des Kopfes (11) am Tubenkörper (10) gebildet wird.

5. Verfahren nach einem der Ansprüche 1 bis 3, **dadurch gekennzeichnet, dass** bei gleichzeitiger Anordnung des Kopfes (11) am Tubenkörper (10) der Kopf (11) durch Spritzgiessen gebildet wird.

6. Verfahren nach einem der Ansprüche 1 bis 3, **dadurch gekennzeichnet, dass** der Kopf (11) als ein mit dem Tubenkörper (10) in einem gesonderten Schritt zu verbindendes Fertigteil ausgebildet wird.

## Claims

1. Method for the production of a packaging container, especially a packaging tube, wherein a form-bound female mould (29) with press mandrel (28), which on its form-giving end designed to form a discharge opening (17) and a shoulder part (15) carries an internal annular element (18) made of at least one circular edging piece that covers the shoulder part (15), is used to form a tube head (11) with the internal annular element (18) arranged on the shoulder part(15) and joins it to the tube body (10), **characterized in that** the annular element is applied to the press mandrel pre-formed and at angles (a) between its circular edging (31) and a plane perpendicular to the centre line of the press mandrel (28) with pre-forming degrees between 20% and 95% of the angles between the plane perpendicular to the centre line and the surface (32) of the press mandrel (28) that forms the shoulder part (15) and that during the form-giving process the annular element is made to bear against the form-giving surface of the press mandrel (28).

2. Method in accordance with claim 1, **charaterized in that** annular elements (18) with edgings (31) made up of several edging parts (31a, 31b), the edging parts being pre-formed with either identical or different pre-forming degrees, are applied to press mandrels (28).

3. Method in accordance with claim 1 or claim 2, **characterized in that** annular elements with pre-forming degrees of between 40% and 60% are applied to press mandrels.

4. Method in accordance with any one of claims 1 to 3, **charaterized in that** the head (11) is produced by press (hot) moulding, the head (11) being simultaneously attached to the tube body (10).

5. Method in accordance with any one of claims 1 to 3, **characterized in that** the head (11) is produced by injection moulding, the head (11) being simultaneously attached to the tube body (10).

6. Method in accordance with any one of claims 1 to 3, **characterized in that** the head (11) is designed as a prefabricated part that is to be attached to the tube body (10) in a separate step.

## Revendications

1. Procédé de fabrication d'un contenant de conditionnement, en particulier d'un tube de conditionnement dans lequel on démoule, au moyen d'une matrice liée au moule (29) avec un poinçon (28) qui porte, sur son extrémité façonnante formant une ouverture de déversement (17) et un élément d'épaulement (15), une rondelle intérieure (18) recouvrant l'élément d'épaulement, constituée d'au moins un bord (31) circulaire, une tête de tube (11) avec une rondelle intérieure (18) disposée sur l'élément d'épaulement (15) et la façonne sur un tuyau tubulaire (10), **caractérisé en ce que** la rondelle (18) est placée sur la surface façonnante du poinçon (28) en formant des angles (a) entre son bord (31) circulaire et un plan perpendiculairement à la ligne médiane du poinçon (28) avec des taux de préformage de 20 à 95 % de la surface (32) du poinçon (28) formant des angles entre le plan perpendiculairement à la ligne médiane et l'élément d'épaulement (15) et **en ce que** la rondelle (28) est amenée contre la surface façonnante du poinçon (28) pendant l'opération de façonnage.

2. Procédé selon la revendication 1, **caractérisé en ce qu'**on place sur des poinçons (28), des rondelles (18) avec des bords (31) constitués de plusieurs parties (31a, 31b), ces parties de bord étant configurées entre elles avec des taux de préformage identiques ou différents.

3. Procédé selon la revendication 1 ou 2, **caractérisé en ce qu'**on place des rondelles ayant des taux de préformage de 40 à 60 % sur des poinçons.

4. Procédé selon l'une quelconque des revendications 1 à 3, **caractérisé en ce que** la tête (11) est formée par matriçage en disposant simultanément la tête (11) sur le corps de tube (10).

5. Procédé selon l'une quelconque des revendications 1 à 3, **caractérisé en ce que**, tout en disposant simultanément la tête (11) sur le corps de tube (10), la tête (11) est formée par moulage par injection.

6. Procédé selon l'une quelconque des revendications 1 à 3, **caractérisé en ce que** la tête (11) est configurée en forme de pièce finie à relier au corps de tube (10) au cours d'une étape séparée.
